(19) Europäisches Patentamt

European Patent Office

Office européen des brevets

(11) Veröffentlichungsnummer: **0 259 518 B1**

(12) **EUROPÄISCHE PATENTSCHRIFT**

(45) Veröffentlichungstag der Patentschrift: **22.07.92**

(21) Anmeldenummer: **86112976.5**

(22) Anmeldetag: **19.09.86**

(51) Int. Cl.⁵: **F16L 55/10**, F16L 55/16, F16L 55/18

(54) **Verfahren zum Reparieren unterirdisch verlegter Rohrleitungen.**

(30) Priorität: **09.09.86 DE 3630582**

(43) Veröffentlichungstag der Anmeldung:
**16.03.88 Patentblatt 88/11**

(45) Bekanntmachung des Hinweises auf die
Patenterteilung:
**22.07.92 Patentblatt 92/30**

(84) Benannte Vertragsstaaten:
**AT BE CH DE FR GB IT LI LU NL SE**

(56) Entgegenhaltungen:
**FR-A- 1 224 256**
**GB-A- 2 169 983**
**US-A- 3 762 446**
**US-A- 3 834 421**

(73) Patentinhaber: **Janssen, Franz**
**Prostewardsweg 27**
**W-4192 Kalkar-Wissel(DE)**

(72) Erfinder: **Janssen, Franz**
**Prostewardsweg 27**
**W-4192 Kalkar-Wissel(DE)**

(74) Vertreter: **Gille, Christian, Dipl.-Ing. et al**
**Türk, Gille + Hrabal Patentanwälte Bruckner**
**Strasse 20**
**W-4000 Düsseldorf 13(DE)**

## Beschreibung

Die Erfindung betrifft ein Verfahren zum Reparieren unterirdisch verlegter Rohrleitungen wie Kanalisationsleitungen, wobei ein zylindrischer Packer, der mittels Druckluft aufblähbar ist und Leitungen zum Zuführen von Abdichtmaterial, die zwischen den aufblähbaren Endteilen zur Außenseite des Packers münden, aufweist, verwendet wird.

Ein hierfür bekannter Packer dieser Art (DE-C-22 12 330) hat einen starren Zylinder mit gegenüber dem Durchmesser der abzudichtenden Rohrleitungen deutlich geringerem Durchmesser, auf dem im Abstand voneinander aufblähbare Körper angeordnet sind, welche den Bereich, innerhalb dem eine Leckstelle abzudichten ist, gegenüber den übrigen Teilen der Rohrleitung getrennt halten sollen, wenn sie aufgebläht sind. Dieser Packer ist aber nicht nur kostspielig in der Ausführung, sondern hat auch den Nachteil, daß im Betrieb zwischen den aufgeblähten Enden ein lichter Raum um den Zylinder herum gegenüber der Innenwand der Rohrleitung verbleibt, welcher mit Abdichtmaterial zumindest teilweise gefüllt werden kann, das in der sanierten Rohrleitung, deren lichten Querschnitt verengend, verbleibt, wenn der Packer im entspannten Zustand wegbewegt wird. Somit wird verhältnismäßig viel Abdichtmaterial benötigt, das im noch bildsamen Zustand nivelliert werden soll, wie in Verbindung mit einem weiteren bekannten Packer (GB-A-2 169 983) beschrieben. Zu diesem Zweck muß der Packer aber im aufgeblähten Zustand in der Rohrleitung verschoben werden, was praktisch kaum durchführbar ist. Schnell härtende Abdichtmaterialien können überhaupt nicht verarbeitet werden, weil diese unmittelbar nach dem Austreten aus dem Packer aushärten, bevor der Packer zum Nivellieren verschoben werden kann. Rohrausbrüche Lassen sich überhaupt nicht abdichten.

Hinzu kommt, daß diese vorbekannten Packer verhältnismäßig kompliziert und dementsprechend kostspielig sind.

Der Erfindung liegt die Aufgabe zugrunde, eine preiswerte Möglichkeit zum Reparieren unterirdisch verlegter Rohrleitungen wie Kanalisationsleitungen zu schaffen, mit der Lecks sowie Rohrbrüche in Rohrleitungen schnell derart abgedichtet werden können, daß der innere bzw. lichte Durchmesser der Rohrleitung durch das Abdichtmaterial nicht verringert und nicht unnötig viel Abdichtmaterial verbraucht wird.

Diese Aufgabe wird erfindungsgemäß mit einem Verfahren gemäß Anspruch 1 gelöst.

Der verwendete Packer weist einen aus elastischem Material wie Gummi bestehenden Schlauch auf, der im Bereich seiner beiden mittels starrer Endstücke geschlossenen Enden eine geringere Wandstärke oder eine größere Dehnfähigkeit als im mittleren Bereich hat. Mit anderen Worten wird ein Packer verwendet, der über seine gesamte Länge aus einem Schlauch besteht, welcher zwar über seine gesamte Länge aufblähbar und damit in seinem Durchmesser vergrößerbar ist, jedoch in seinen Endbereichen stärker als im mittleren Bereich gedehnt werden kann. Dementsprechend ist der Packer in der Lage, die gewünschte Abdichtung zwischen Packer und Rohrleitung zu den Enden des Packers zu erzielen, im mittleren Bereich, nämlich dem Sanierungsbereich, wo die abzudichtenden Stellen der Rohrleitung liegen, aber nur mit verhältnismäßig geringem Druck an der Innenwand der zu sanierenden Rohrleitung anliegt, so daß hier sich zwar das zugeführte Abdichtmaterial einleiten läßt und in die gerissenen oder sogar ausgebrochenen Stellen der Rohrleitung eindringen kann, jedoch vom Schlauch auch gleichzeitig in die abzudichtenden Stellen oder Risse bzw. öffnungen hineingedrückt und in diesen gehalten wird, bis die Erstarrung stattgefunden hat.

Dadurch ist es möglich, zwischen den aufgeblähten und dementsprechend abdichtenden Enden des Packers Abdichtmaterial zuzuführen, das zwar in Risse, Brüche und dergleichen der zu sanierenden Rohrleitung gelangen soll, jedoch gewährleistet der mittlere Abschnitt des Packers, daß dieses Abdichtmaterial sich nicht auch im Inneren der zu sanierenden Rohrleitung aufbaut, sondern nur in die Risse, Brüche oder dergleichen der zu sanierenden Rohrleitung fließt und dort gehalten wird, bis es erstarrt ist. Dementsprechend wird durch das Einspritzen von Abdichtmaterial die zu sanierende Rohrleitung in ihrem Lichten Durchmesser nicht verringert.

Vorzugsweise hat der Schlauch des Packers eine glatte, abweisende Oberfläche, damit sich das in die Risse, Brüche oder sonstige öffnungen der zu sanierenden Rohrleitung einzudrückende Abdichtmaterial nicht mit der Oberfläche des Packers verbinden kann, sondern sich der Packer von der erstarrten Masse des Abdichtmaterials ohne weiteres Lösen läßt.

In einer besonders einfachen und bevorzugten Ausführungsform weist der Schlauch des verwendeten Packers im mittleren Bereich einen zylindrischen Einsatz aus ebenfalls plastischem bzw. dehnbarem Material auf, wodurch genau zu begrenzen ist, wo die mehr und die weniger elastisch dehnbaren Abschnitte des Packers liegen. Wichtig ist, daß der zum Reparieren verwendete Packer nicht nur in seinen Endbereichen dehnbare und damit abdichtende Abschnitte aufweist, sondern auch in seinem mittleren Bereich dehnbar ist, damit er zwar den lichten Querschnitt der zu sanierenden Rohrleitung einnehmen kann, jedoch den Durchtritt des zu den Rissen, Brüchen oder sonstigen Löchern der zu sanierenden Rohrleitung zu führenden Abdichtmaterials ermöglicht, ohne daß dieses über den lichten Innendurchmesser der zu sanierenden Rohrleitung merklich überstehen müßte und somit den Rohrquerschnitt verengen könnte.

Der verwendete Packer ist also derart ausgebildet, daß in seinem mittleren Bereich Abdichtmaterial zugeführt werden kann, dieses jedoch aufgrund des gegen die Innenwand der zu sanierenden Rohrleitung mit mäßigen Druck anliegenden mittleren Abschnittes des Packers in die abzudichtenden Stellen und das dahinterliegende Erdreich gedrückt wird, damit es in der gewünschten Abdichtlage aushärten kann. Somit wird vermieden, daß das Abdichtmaterial den lichten Querschnitt der zu sanierenden Rohrleitung verringert und unnötig viel Abdichtmaterial verbraucht wird.

Mit der Erfindung ist es möglich, nicht nur Risse oder Brüche in zu sanierenden, unterirdisch verlegten Rohrleitungen mit Abdichtmaterial zu füllen und somit abzudichten, sondern selbst Ausbruchstellen zu sanieren, weil der mittlere Abschnitt des verwendeten Packers wie eine Art Schalung sich gegen den Bereich der abzudichtenden und damit zu sanierenden Stellen legt und somit gewährleistet, daß das unter Druck zugeführte Abdichtmaterial sich der ursprünglichen Oberfläche der Innenwand der zu sanierenden Rohrleitung anpaßt.

Mit der Erfindung können demgemäß nicht nur Risse oder Brüche in Rohrleitungen abgedichtet werden, sondern auch Ausbruchstellen, d.h. Stellen, an denen Stücke aus der Rohrleitung selbst ausgebrochen sind, weil das erfindungsgemäße Verfahren nicht nur die gezielte Zufuhr von Abdichtmaterial gewährleistet, sondern auch sicherstellt, daß dieses Abdichtmaterial die ursprünglich vorhandene Wand der Rohrleitung wieder ausfüllt.

Die Erfindung sieht ferner vor, daß als Abdichtmaterial ein Zweikomponenten-Kunststoff verwendet werden kann, dessen beide Komponenten erst unmittelbar vor der Sanierungsstelle, d.h. erst kurz vor dem Austritt aus dem Packer, zusammengeführt werden. Zu diesem Zweck ist der Packer mit zwei getrennten Rohrleitungen zur Zufuhr der beiden Komponenten des Abdichtmateriales ausgestattet, die jedoch in einer gemeinsamen Mündung enden. Auf diese Weise lassen sich schnell aushärtende Abdichtmaterialien verarbeiten, d.h. beispielsweise Kunststoffe, die schnell reagieren, sobald ihre beiden Komponente zusammengeführt wurden. Die Aushärtzeiten sind in diesem Falle kurz, so daß der Packer sich in den einzelnen Sanierbereichen nur für verhältnismäßig kurze Zeiten befinden muß. Die Sanierarbeiten lassen sich somit schneller und preiswerter durchführen. Andererseits ist die Gefahr einer Verstopfung der Zufuhrleitungen durch Aushärten des Abdichtmaterials gering, weil die Komponenten des Abdichtmaterials erst in unmittelbarer Nähe der auf die Außenseite des Packers führenden Mündung der Zufuhrleitung zusammengeführt werden.

In der Zeichnung ist ein Ausführungsbeispiel einer für das erfindungsgemäße Verfahren zum Reparieren unterirdisch verlegter Rohrleitungen verwendbaren Vorrichtung schematisch dargestellt, und zwar zeigt

Fig. 1  einen Längsschnitt der Vorrichtung in entspanntem, d.h. nicht aufgeblähtem Zustand und

Fig. 2  eine Seitenansicht der aufgeblähten Vorrichtung, die sich jedoch nicht in einer Rohrleitung befindet, so daß die sich beim Aufblähen stärker dehnenden Endbereiche gut zu erkennen sind.

Die Vorrichtung besteht im wesentlichen aus einem Packer (1), der von einer zylindrischen Blase (2) und in deren Enden eingesetzten starren Deckeln (3 und 4) gebildet ist. Die zylindrische Blase (2) ist elastisch dehnbar, wie weiter unten näher erläutert wird.

Die Deckel (3 und 4) sind über ein Drahtseil (5) untereinander verbunden, so daß ihr gegenseitiger Abstand begrenzt ist. Außerdem verläuft zwischen den Deckeln (3 und 4) ein biegsames Rohr (6) bzw. ein biegsamer Schlauch, der als Durchgang für ein nicht dargestelltes Fernsehkabel oder für andere Leitungen dient.

Die zylindrische Blase (2) besteht aus einem elastischen Schlauch, beispielsweise aus Gummi, in dessen Enden die starren Deckel (3 und 4) eingesteckt sind. Eine aufgesetzte Schelle (7) sorgt für eine dauerhafte und dichte, jedoch lösbare Klemmverbindung zwischen dem die Blase (2) bildenden Gummischlauch und dem jeweiligen Deckel (3 bzw. 4).

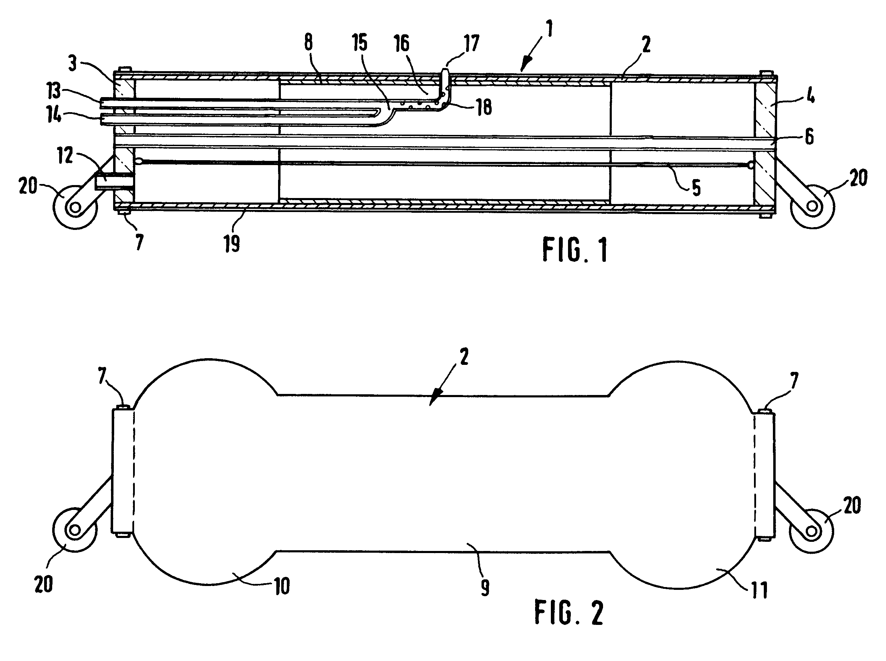

Im mittleren Bereich ist in den die Blase (2) bildenden elastischen Schlauch ein Schlauchstück (8) eingesetzt, das zweckmäßig aus demselben Material wie die Blase (2) besteht und mit deren Innenwand vollflächig und dauerhaft verbunden ist. Dementsprechend hat der mittlere Abschnitt (9) der Blase (2) eine größere Wandstärke als die beiden Endabschnitte (10 und 11) der Blase (2) , so daß sich der mittlere Abschnitt (9) weniger stark als die Endabschnitte (10 und 11) dehnen Läßt, wie Figur 2 zeigt. Die Dehnungsverhältnisse zwischen den Abschnitten (9) einerseits und (10 und 11) andererseits sind in Figur 2 nicht notwendig maßstabgetreu dargestellt. Vielmehr soll Figur 2 lediglich deutlich machen, daß sich die Blase (2) in den Endbereichen stärker als im mittleren Bereich dehnen läßt, wenn durch einen an den Deckel (3) angeschlossenen Schlauch (12) Druckluft in die Blase (2) eingeleitet wird.

Durch den Deckel (3) sind außerdem parallel zueinander zwei getrennte Rohrleitungen (13 und 14) in das Innere der Blase (2) geführt, durch die die Komponenten des zum Sanieren benutzten Abdichtmaterials getrennt voneinander herangeführt werden können. Die Rohrleitungen (13 und 14) münden an einer im mittleren Bereich der Blase (2) befindlichen Verbindungsstelle (15) ineinander, von der ein verhältnismäßig kurzes Rohrstück (16) zu einem Mundstück (17) , das eine zur Außenseite der Blase (2) führende Austrittsöffnung für das Abdichtmaterial bildet, führt.

Die durch die Rohrleitungen (13 und 14) zunächst getrennt herangeführten beiden Komponenten des Abdichtmaterials werden im Bereich des Rohrstückes (16) zwischen der Verbindungsstelle (15) und dem Mundstück (17) miteinander vermischt, um das für die Sanierung benutzte Zweikomponenten-Abdichtmaterial zu bilden. Innerhalb des Rohrstückes (16) können Schikanen (18) eingebaut sein, so daß das Rohrstück (16) als eine Art statischer Mischer zum intensiven Vermischen der beiden Komponenten des Abdichtmaterials wirkt.

Auf der Außenseite des die Blase (2) bildenden Gummischlauches ist eine Folie (19) mit glatter und insbesondere kunststoffabweisender Oberfläche angeordnet. Diese Folie verhindert, daß sich das aus dem Mundstück (17) ausgespritzte Abdichtmaterial mit dem Gummi der Blase (2) verbinden kann.

Daher läßt sich der Packer (1) nach Aushärten des in zu sanierende öffnungen innerhalb einer Rohrleitung ausgespritzten Abdichtmaterials aus dem Sanierungsbereich problemlos entfernen, einfach indem man die Blase (2) über die Schlauchleitung (12) entlüftet, wodurch sich diese elastisch zusammenzieht und ihr Durchmesser schrumpft.

Der in der Zeichnung dargestellte Packer läßt sich in nicht näher dargestellter Weise an ein in einer Rohrleitung verfahrbares Gerät anschließen oder auch über eine ebenfalls nicht dargestellte Seilverbindung in üblicher Weise bewegen.

Zum Verfahren ist der Packer (1) an seinen beiden Enden mit Rädern (20) versehen, die an den Deckeln (3 und 4) gelagert sind. Somit kann der nur unter geringem Luftdruck stehende Packer (1) zur jeweiligen Reparaturstelle in einer Rohrleitung verfahren werden, ohne daß seine Oberfläche und insbesondere die Folie (19) mit der Rohrwand in Berührung kommt.

Der Packer (1) ist nicht nur zum Sanieren von Rohrleitungen mit kreisförmigem Querschnitt , sondern auch zum Sanieren bzw. Reparieren von Rohrleitungen mit anderen Querschnitten, beispielsweise eiförmigem Querschnitt bzw. Ei-Profil , geeignet.

**Patentansprüche**

1. Verfahren zum Reparieren unterirdisch verlegter Rohrleitungen wie Kanaliationsleitungen, bei dem ein mittels Druckluft aufblähbarer zylinderförmiger Packer (1), der einen sich über seine gesamte Länge erstreckenden, aus elastischem Material wie Gummi bestehenden Schlauch (2) aufweist, welcher im Bereich seiner beiden mittels starrer Endstücke (3, 4) geschlossenen Enden eine geringere Wandstärke oder eine größere Dehnfähigkeit als im mittleren Bereich (9) hat, im entspannten Zustand in dem Bereich einer zu reparierenden Leckstelle einer Rohrleitung positioniert und dann derart aufgebläht wird, daß er sich mit seinen stärker dehnbaren Enden (10, 11) dichtend gegen die Rohrleitung legt und mit seinem mittleren Bereich nach Art einer Schalung mit verhältnismäßig geringem Druck an der Innenwand der zu sanierenden Rohrleitung anliegt, woraufhin durch zwischen den aufblähbaren Endteilen (10, 11) des Packers (1) zur Außenseite desselben mündende Leitungen (13 bis 18) Abdichtmaterial eingeleitet, in die Leckstellen hineingedrückt und bis zum Erstarren vom Packer (1) gehalten wird.

2. Verfahren nach Anspruch 1, dadurch gekennzeichnet, daß als Abdichtmaterial ein Zweikomponenten-Kunststoff verarbeitet wird, dessen Komponenten getrennt voneinander zugeführt und unmittelbar vor dem Ausspritzen aus dem Packer zusammengeführt und miteinander vermischt werden.

**Claims**

1. Method for repairing underground pipes such as sewer pipes, wherein a cylindrical packing device (1) capable of being inflated by compressed air having a hose (2) extending over the entire length of the packing device and comprising of elastic material like rubber, which hose has in the vicinity of its both ends which are closed by means of rigid end pieces (3,4) a reduced wall thickness or an enhanced extendability as in the central portion (9), such packing device - when in slacked condition - being positioned in the area of a leak to be repaired within a pipe and is then thus inflated that its ends (10, 11) having a greater ability to expand are sealingly positioned against the pipe and that its central portion lies like a concrete form with relatively low pressure against the inner wall of the pipe to be repaired, whereafter through lines (13 to 18) ending between the inflated end portions (10, 11) of the packing device (1) to the outside thereof sealing material is introduced which is pressed into the leak and is held by the packing device ends until it became rigid.

2. Method as claimed in claim 1, characterized in that the sealing material is a two component resin, the components thereof being supplied independent of one another and are immediately before ejecting from the packing device united and intermixed with one another.

**Revendications**

1. Procédé pour réparer des tuyauteries ou canalisations enterrées, dans lequel une cartouche (Packer) cylindrique (1) comportant un tuyau souple, en matériau élastique tel que le caoutchouc, qui s'étend sur toute sa longueur et qui a, dans la zone de ses deux extrémités fermées par des pièces terminales rigides (3, 4), une épaisseur de paroi plus faible et une expansivité plus grande que dans la zone médiane (9), est positionné à l'état détendu dans la zone de fuite à réparer d'une canalisation et est ensuite gonflé de manière à s'appuyer, par ses extrémités plus fortement extensibles(10, 11) en formant étanchéité, contre la canalisation et s'applique par sa zone médiane comme un coffrage avec une pression relativement faible à la paroi intérieure de la canaliastion à assainir, un matériau de bouchage étant introduit par des canalisations (13 à 18) débouchant entre les extrémités gonflables (10, 11) de la cartouche (1) sur la paroi extérieure de celle-ci et étant envoyé sous pression aux endroits des fuites et maintenu jusqu'au durcissement par la cartouche (1).

2. Procédé selon la revendication (1), caractérisé en ce qu'on utilise, comme matériau de bouchage, une matière synthétique à deux composants, dont les composants sont amenés séparément l'un de l'autre et, immédiatement avant la projection hors de la cartouche, rassemblés et mélangés ensemble.

FIG. 1

FIG. 2

EP 0 259 518 B1